## Europäisches Patentamt
## European Patent Office
## Office européen des brevets

(11) Veröffentlichungsnummer : **0 067 421 B2**

(12) **NEUE EUROPÄISCHE PATENTSCHRIFT**

(45) Veröffentlichungstag der neuen Patentschrift :
02.10.91 Patentblatt 91/40

(51) Int. Cl.⁵ : **B65G 19/02,** B65G 37/00,
B65G 35/06

(21) Anmeldenummer : **82105083.8**

(22) Anmeldetag : **11.06.82**

(54) **Bodenfördersystem.**

(30) Priorität : 15.06.81 DE 3123638
15.06.81 DE 3123706

(43) Veröffentlichungstag der Anmeldung :
22.12.82 Patentblatt 82/51

(45) Bekanntmachung des Hinweises auf die
Patenterteilung :
26.02.86 Patentblatt 86/09

(45) Bekanntmachung des Hinweises auf die
Entscheidung über den Einspruch :
02.10.91 Patentblatt 91/40

(84) Benannte Vertragsstaaten :
AT BE CH DE FR GB IT LI NL SE

(56) Entgegenhaltungen :
EP-A- 0 010 550
DE-A- 1 780 603
DE-A- 1 903 645

(56) Entgegenhaltungen :
DE-A- 2 924 361
DE-C- 554 623
DE-C- 2 137 910
JP-A- 5 548 114
PATENT ABSTRACTS OF JAPAN, unexamined
applications, M Field, Vol. 4, No. 92, 3. Juli 1980
THE PATENT OFFICE JAPANESE GOVERN-
MENT Seite 9 M 18

(73) Patentinhaber : FREDENHAGEN KG
Sprendlinger Landstrasse 181
W-6050 Offenbach/Main (DE)

(72) Erfinder : Kupczyk, Werner
Lerchesbergring 112
W-6000 Frankfurt/Main 70 (DE)

(74) Vertreter : Stoffregen, Hans-Herbert, Dr.
Dipl.-Phys. et al
Patentanwälte Strasse & Stoffregen
Salzstrasse 11a Postfach 2144
W-6450 Hanau/Main 1 (DE)

EP 0 067 421 B2

## Beschreibung

Die Erfindung bezieht sich auf ein Verfahren zum Transport von Automobilkarosserien auf einer Tragein-richtung, die von einem Boden schleppketten förderer transportiert wird sowie eine Vorrichtung zur Durchführung des Verfahrens gemäß Oberbegriff des Anspruchs 5.

Zu den Bodenlördersystemen gehören unter anderem die Schleppkettenförderer und die Tragförderer, zu denen Schlitten- oder Kufen- und Tragkettenförderer zu zählen sind. Bei den Schleppkettenförderern wird das Fördergut ausschließlich durch Schleppen oder Schieben fortbewegt. Das Fördermittel, das nur als Zugmittel wirkt und keine lasttragende Funktion ausübt, wird meist innerhalb oder unterhalb der Förderebene, manchmal auch unmittelbar oberhalb der Förderebene verlegt. Mittels bodenseitig an den für das Fördergut bestimmten Aufnahmevorrichtungen angeordneter Räder erfolgt dann der Transport auf einer Fahrbahn. Schleppketten-förderer sind überaus wartungsfreundlich, zeigen jedoch hinsichtlich einer Geschwindigkeitsanpassung, einer Stapelung und einer Richtungsänderung auf engstem Raum zum Teil erhebliche Nachteile.

Bei einem Schlitten- oder Kufenförderer übernimmt das Fördermittel den Transport und übt gleichzeitig eine lasttragende Funkion aus. Die Förderung kann dabei über Ketten oder über Rollen erfolgen. Das Fördergut liegt über Kufen bzw. Gleitschuhe auf den Rollen oder Ketten auf und wird durch Reibungsschluß mitgenommen. Schlitten- oder Kufenförderer zeigen den Vorteil, daß die Transportgeschwindigkeit den Gegebenheiten schnell angepaßt werden kann, d.h., daß zum Beispiel bei einem Einsatz in Montagebetrieben in der Automobilindustrie die Transportgeschwindigkeit der Dauer in den verschiedenen Bearbeitungsstationen angepaßt werden kann. Eine solche Möglichkeit besteht bei einem Schleppkettenförderer, der als Stetigförderer für Stückgut bezeichnet werden kann, nicht. Ein Nachteil der Schlitten- oder Kufenförderer ist jedoch darin zu sehen, daß diese insbesondere z.B. durch die Vielzahl der Antriebe bedingt recht wartungsintensiv und durch den höheren Steuerungsaufwand auch störanfällig sind.

Aus der EP-A-0 010 550 ist ein auf Lenk- und Laufrollen abgestützter Förderbehälter beschrieben, der zur Aufnahme von Post- und Paket- sendungen oder Kleingepäck bestimmt ist und grundsätzlich von Hand bewegt wird. Um gegebenenfalls mittels eines Förderers transportiert zu werden, sind verstell- und ausfahrbare Kufen vorgesehen.

In der Literaturstelle Patent Abstracts of Japan, Vol. 4, Nr. 92 (Japanische Patentanmeldung 55-48114) wird eine Vorrichtung beschrieben, die zum Beispiel durch Brennöfen einer Lackiererei geführt werden kann. Dabei besteht die Möglichkeit, die einen Tragrahmen umfassende Vorrichtung auf verschiedenen Niveaus vor und hinter dem Brennofen zu transportieren. Der Transport selbst erfolgt stets mittels einer Schleppkette, also durch ein Bodenförderverfahren unter Verwendung eines Schleppkettenförderers.

Aufgabe der vorliegenden Erfindung ist es, ein derartiges Verfahren so auszubilden, daß eine variable Transportgeschwindigkeit des Fördergutes, in Form von Automobilkarosserien eine Stapelung des Fördergutes auf engstem Raum und eine schnelle und nahezu beliebige Richtungsänderung ermöglicht wird, wobei gleichzeitig eine hohe Wartungsfreundlichkeit gewährleistet sein soll.

Die Aufgabe wird erfindungsgemäß dadurch gelöst, daß der Transport bereichsweise durch einen die Förderung und die lasttragende Funktion ausübenden Tragförderer (K) (Schlitten- oder kufenförderer) erfolgt, daß der Übergang von dem Schleppkettenförderer (R) auf den Tragförderer (K) und umgekehrt stetig erfolgt und daß der Tragförderer (K) einen eine Hubbewegung ausführenden Abschnitt, dessen Länge der Aufnahme zumindest einer Trageinrichtung genügt, aufweist, der dazu dient, die vom Schleppkettenförderer kommende Trageinrichtung auf einen weiteren Abschnitt des Tragförderers abzusetzen, welcher weitere Abschnitt eine Förderung der Trageinrichtung quer zur Förderrichtung des Schleppkettenförderers bewirkt. Ein entsprechend ausgebildetes Fördersystem beinhaltet sämtliche Vorteile, die der Schleppkettenförderer und der Schlitten- oder Kufenförderer für sich aufweisen, ohne daß deren Nachteile übernommen werden müssen. Soll zum Beispiel das erfindungsgemäße Bodenfördersystem in Montagebetrieben der Automobilindustrie Verwendung finden, so kann der wartungsfreundliche Schleppkettenförderer in den Bereichen Einsatz finden, wo z.B. eine hohe Verschmutzung wie in der Lackiererei anfällt oder wo ein Transport über lange weitgehend gradlinig verlaufende Strecken erfolgt. Soll jedoch eine Richtungsänderung des Fördergutes auf engstem Raum oder z.B. eine Verteilung des Fördergutes auf verschiedene Förderbahnen erfolgen, so wird der Schlitten- oder kufenförderer bevorzugt.

Um Richtungsänderungen, also Längsförderungen in unterschiedlichen Richtungen oder eine Querförderung mit dem Schlitten- oder kufenförderer vornehmen zu können, wird das Fördergut vor der Richtungsänderung von einem Hubtisch aufgenommen, entlang dessen zumindest teilweise die Querförderung erfolgt.

Der Hubtisch stellt demzufolge einen eine Hubbewegung ausführenden Abschnitt des Schlitten- oder kufenförderers dar, dessen Länge der Aufnahme von zumindest einer Fördergutaufnahmevorrichtung genügt. Durch die Bewegung des Hubtisches ist sichergestellt, daß die Räder der Fördergutaufnahmevorrichtung bei einer Transportrichtungsänderung mit den Fördereinrichtungen, seien es Rollen oder ketten, der angrenzenden Abschnitte des Schlittenförderers nicht in Eingriff gelangen.

Nach einer weiteren Ausgestaltung der Erfindung ist das in dem Bodenfördersystem transportierte Fördergut stapelbar.

Eine Vorrichtung gemäß Oberbegriff des Anspruchs 5 zeichnet sich dadurch aus, daß die Vorrichtung aus dem Schleppkettenförder (R), einem Tragförderer (K) und der Trageinrichtung besteht, daß in der Vorrichtung die Trageinrichtung wahlweise mittels des Schleppkettenförderers (R) oder des Tragförderers (K) förderbar ist und daß die Stege mit dem Tragförderer in Wechselwirkung tretende Kufen sind, wobei der Tragförderer einen eine Hubbewegung ausführenden Abschnitt aufweist, dessen Länge der Aufnahme zumindest eine Trageinrichtung genügt, wobei der die Hubbewegung ausführende Abschnitt dazu dient, die vom Schleppkettenförderer kommende Trageinrichtung auf einen weiteren Abschnitt des Tragförderers abzusetzen, welcher weitere Abschnitt eine Förderung der Trageinrichtung quer zur Förderrichtung des Schleppkettenförderers bewirkt. Wird demzufolge die Trageinrichtung für das Fördergut mittels des Schleppkettenförderers auf dem Boden entlangbezogen, so gelangen die Kufen mit diesem nicht in Berührung. Eine Störung des üblichen Schleppkettenförderablaufs erfolgt nicht. Soll sodann die Trageinrichtung von dem Trag- oder Schlittenförderer aufgenommen werden, so gelangen die Kufen nur mit diesem in Wechselwirkung, wobei die Transportebene des Schlittenförderers höher als die des Schleppkettenförderers gelegen ist, um einen lichten Abstand zwischen den Rädern un dem Boden zu erzielen.

Ausgestaltungen ergeben sich aus den Ansprüchen 6 und 7.

Die Erfindung wird an Hand den in der Zeichnung dargestellten Ausführungsbeispielen näher erläutert.

Es zeigen:

Fig.1 eine Prinzipdarstellung eines erfindungsgemäßen Bodenfördersystems und

Fig. 2 eine Schnittdarstellung einer von dem Bodenfördersystem nach Fig. 1 zu transportierenden Tageinrichtung.

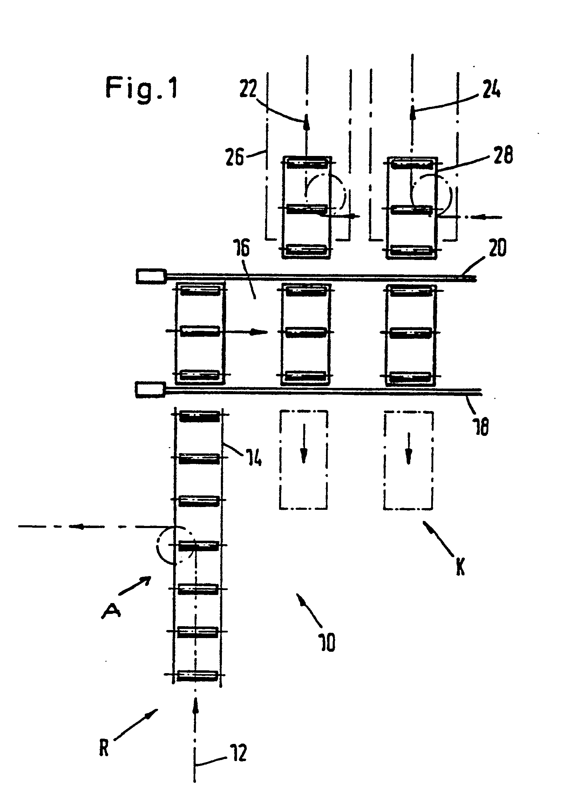

Das erfindungsgemäße Bodenfördersystem 10 gemäß Fig. 1 soll an einem rein schematish dargestellten Aubführungsbeispiel erläutert werden, bei dem ein Übergang von einem Schleppkettenförderer (R) auf einen Kufen- oder Schlittenförderer (K) erfolgt und umgekehrt. Ein nicht dargestelltes Fördergut in Form einer Automobilkarosserie wird von einem Abschnitt 12 des Schleppkettenförderers R bis zum Beispiel zum Punk A transportiert. Sodann gelangt das Fördergut in Ausgrill von dem Schleppkettenförderer R, der weggeführt wird. Mittels einer nicht näher dargestellten Transfereinrichtung gelangt das Fördergut mit dem Abschnitt 14 des Schlittenförderers (K) in Eingriff, um z.B. über Rollen einem Hubtisch 16 übergeben zu werden. Dabei kann der Übergang von dem Schleppkettenförderer über den angrenzenden Abschnitt des Schlittenförderers zu dem Hubtisch 16 über eine Schräge wie zum Beispiel eine Rampe erfolgen. Durch den Hubtisch 16 wird sichergestellt, daß die bei dem Transport mit dem Schleppkettenförderer erforderlichen Rollen am Fördergut bei einer Transportrichtungsänderung (von einer Längsförderung beliebiger Richtungen in eine Querförderung und umgekehrt) mit dem Förderer nicht in Eingrill gelangen. Die zur Querförderung erforderlichen Forderelemente, wie z.B. Ketten oder auch Rollen, sind mit den Bezugszeichen 18 und 20 versehen und seitlich parallel zum Hubtisch 16 verlaufend angeordnet. Gelangt demzufolge eine Trageinrichtung wie ein Tragrahmen auf den Hubtisch 16, so befindet sich dieser in einer angehobenen Stellung. Sodann wird der Hubtisch 16 herabgelassen, damit das Fördergut mittels z.B. Kufen durch Reibungsschluß entlang der Förderelemente 18 und 20 quergefördert werden kann. Von dem Hubtisch 16 ausgehend besteht dann die Möglichkeit, daß erneut eine Längsförderung z.B. In unterschiedlichen Richtungen erfolgt. Bevor jedoch das Fördergut in Längsrichtung transportiert werden soll, muß der Hubtisch 16 erneut angehoben werden, damit die Räder nicht gegen die für die Querförderung notwendigen Förderelemente 18 und 20 stoßen. Von dem Hubtisch 16 ausgehend kann nach einer kurzen Strecke Längsförderung über eine Transfereinrichtung sodann eine Übergabe an Schleppkettenförderer 22 und 24 erfolgen, die das Fördergut z.B. durch Behandlungszonen 26 und 28 mit großem Schmutzanfall ziehen können.

Das Ausführungsbeispiel verdeutlicht, daß durch die erfindungsgemäße Kombination Schleppketten-/Schlitten- oder Kufenförderer das Fördergut auf engstem Raum eine Richtungs-änderung und gewünschte Verteilung erfahren kann.

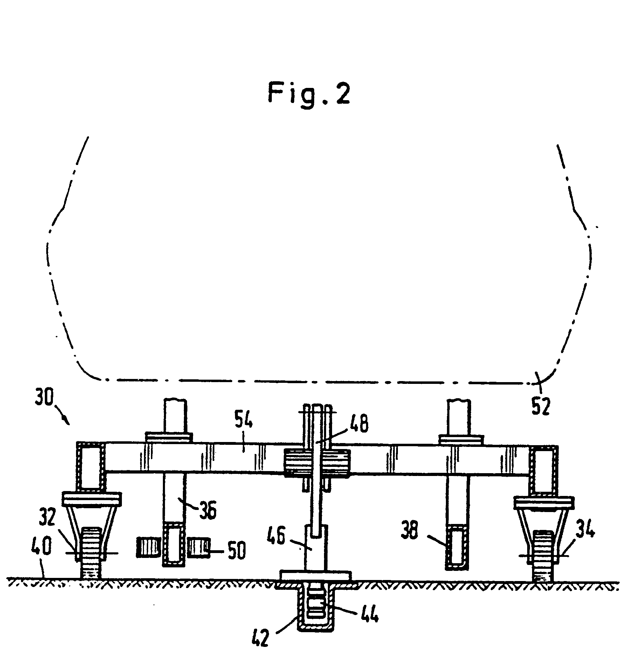

In der Fig. 2 ist eine Fördegutrageinrichtung 30 in Form eines Tragrahmens 54 dargestell, der von dem Bodenfördersystem nach Fig. 1 transportierbar ist, also wahlweise von einem Schleppkettenförderer oder ein Schlitten-/Kufen- förderer mitgenommen wird oder umgekehrt. Zu diesem Zweck weist der Tragrahmen 54 Räder 32, 34 und Kufen 36, 38 auf, die in bezug auf ihre bodenseitige Berührungsfläche auf unterschiedlichen Niveaus liegen, d.h. die Berührungsflächen der Räder 32 und 34 liegen tiefer als die der Kufen 36 und 38. Selbstverständlich könntend die Räder und Kufen auch auf gleichem Niveau liegen, wenn die Transportebenen entsprechende Veränderungen erfahren.

Es sie nun angenommen, daß der Transport des Tragahmens 54, auf dem ein Fördergut in Form eine Automobilkarosserie 52 befestigt sein kann, mittels des Schleppkettenförderers (R) erfolgen soll. Der Tragrahmen 54 läuft dann über die Räder 32 und 34 auf dem Boden 40 entlang und wird dabei von einem Schleppsystem gezogen, welches sich aus einer Kettenführung 42 und einer Kette 44 zusammensetzt. Von der Kette 44 geht im Ausführungs-beispiel ein Mitnehmer 46 aus, welcher in eine an dem Tragrahmen 54 angeordnete Mitnahme-vorrichtung 48 in an sich bekannter Weise in Eingriff gelangt. Selbstverständlich kann auch der Mitnehmer fest am Tragrahmen 54 angeordnet sein, wohingegen die Mitnahmevorrichtung mit der Kette 44 verbunden ist. Im Ausführungs- beispiel ist des weiteren das Schleppsystem unterflurig ausgebildet; verständlicherweise kann der Schleppkenttenförderer jedoch auch ein Überflurförderer sein.

Soll der Tragrahmen 54 Mittels des Trag- oder Schlitten-/Kufenförderers (K) bewegt werden, so gelangen die Kufen 36 und 38 mit in Fig. 2 nicht dargestellten Rollen, die auch durch eine Kette ersetzt sein können, in Eingriff, um durch Reibungsschluß gegen den Bewegungs- widerstand mitgenommen zu werden. Erkennbar berühren dann die Räder 34 und 36 während des Transports mit dem Schlittenförderer den Boden 20 nicht.

Die Fig. 2 verdeutlicht des weiteren, daß der Abstand zwischen den Kufen 36 und 38 geringer als der Abstand zwischen den Rädern 32 und 34 gewählt ist. Auch sollte vorzugsweise die Länge der Kufen 36 bzw. 38 geringer als der Achsenabstand der am Tragrahmen 54 angeordneten äußersten Räder sein. Vorzugsweise weist dabei der Rahmen 54 an seinem vorderen Ende zwei Räder (zum Beispiel 32 und 34) und am hinteren Ende zwei weitere Räder auf. Der Tragrahmen 54 ist dann als zweiachsiger Wagen ausgebildet.

Bei dem Transport auf dem Schleppkettenförderer dienen die Kufen 36 bzw. 38 außerdem als Führungselemente, indem die Kufenseitenflächen an Rollen 50 entlanggeführt werden. Dadurch ist sichergestellt, daß insbesondere bei einer automatisch ablaufenden Förderung und Durchführung des Föderguts durch z.B. mit Robotern bestückten Bearbeitungsstraßen in genauer Förderweg eingehalten wird.

**Patentansprüche**

1. Verfahren zum Transport von Automobilkarosserien (52) auf einer Trageinrichtung (30, 54), die von einem Bodenschleppkettenförderer (R) transportiert wird,
**dadurch gekennzeichnet,**
daß der Transport bereichsweise durch einen die Förderung und die lasttragende Funktion ausübenden Tragförderer (K) (Schlitten- oder Kufenförderer) erfolgt, daß der Übergang von dem Schleppkettenförderer (R) auf den Tragförderer (K) und umgekehrt stetig erfolgt und daß der Tragförderer (K) einen eine Hubbewegung ausführenden Abschnitt (16), dessen Länge der Aufnahme zumindest einer Trageinrichtung (30, 54) genügt, aufweist, der dazu dient, die vom Schleppkettenförderer kommende Trageinrichtung auf einen weiteren Abschnitt des Tragförderers abzusetzen, welcher weitere Abschnitt eine Förderung der Trageinrichtung quer zur Förderrichtung des Schleppkettenförderers bewirkt.

2. Verfahren nach Anspruch 1,
**dadurch gekennzeichnet,**
daß die Transportebene der Trageinrichtung (30, 54) für die Automobilkarosserie (52) beim Schleppkettenförderer (R) auf einem anderen Niveau liegt als die des Tragförderers (K).

3. Verfahren nach zumindest Anspruch 1,
**dadurch gekennzeichnet,**
daß die Hubbewegung mittels eines Hubtisches (16) durchgeführt wird.

4. Verfahren nach zumindest Anspruch 1,
**dadurch gekennzeichnet,**
daß das Fördergut (52) gestapelt wird.

5. Vorrichtung zur Durchführung des Verfahrens nach zumindest Anspruch 1, umfassend eine Trageinrichtung (54) für die Automobilkarosserie mit bodenseitig angeordneten Rädern (32, 34) und Stegen (36, 38) mit auf unterschiedlichem Niveau liegenden Auflagenberührungsflächen sowie einer bodenseitigen, mit einem Schleppkettenförderer (R) in Eingriff gelangenden Mitnahmevorrichtung (48),
**dadurch gekennzeichnet,**
daß die Vorrichtung aus dem Schleppkettenförderer (R), einem Tragförderer (K) und der Trageinrichtung (54) besteht, daß in der Vorrichtung die Trageinrichtung wahlweise mittels des Schleppkettenförderers (R) oder des Tragförderers (K) förderbar ist und daß die Stege (36, 38) mit dem Tragförderer in Wechselwirkung tretende Kufen sind, wobei der Tragförderer einen eine Hubbewegung ausführenden Abschnitt aufweist, dessen Länge der Aufnahme zumindest einer Trageinrichtung (30, 54) genügt, wobei der die Hubbewegung ausführende Abschnitt dazu dient, die vom Schleppkettenförderer kommende Trageinrichtung auf einen weiteien Abschnitt des Tragförderers abzusetzen, welcher weitere Abschnitt eine Förderung der Trageinrichtung quer zur Förderrichtung des Schleppkettenförderers bewirkt.

6. Vorrichtung nach Anspruch 5,
**dadurch gekennzeichnet,**
daß die Länge der in Haupttransportrichtung der Trageinrichtung (30, 54) verlaufenden Kufen (36, 38) geringer als der Achsenabstand der an der Trageinrichtung (54) angeordneten äußeren Räder (36, 38) ist.

7. Vorrichtung nach Anspruch 5,
**dadurch gekennzeichnet,**
daß beim Transport durch den Schleppkettenförderer (R) die Kufenseitenflächen der Trageinrichtung (30, 54) an Rollen (50) entlanggeführt sind.

## Claims

1. Method of transporting car bodies (52) on a bearing device (30, 54), which is transported by a floor drag chain conveyor (R), characterised in that transport takes place by areas via a bearing conveyor (K) (slide or runner conveyor), which carries out the conveyance and the load-bearing function, that the transfer from the drag chain conveyor (R) to the bearing conveyor (K) and vice versa takes place continuously, and that the bearing conveyor (K) comprises a section (16) which executes a lifting movement, the length of which is sufficient to accommodate at least one bearing device (30, 54) and which is used to deposit the bearing device coming from the drag chain conveyor on a further section of the bearing conveyor, which further section causes the bearing device to be conveyed transversely to the conveying direction of the drag chain conveyor.

2. Method according to claim 1, characterised in that, when being moved by the drag chain conveyor (R), the transport plane of the bearing device (30, 54) for the car body (52) lies at a level which is different to that of the bearing conveyor (K).

3. Method according to at least claim 1, characterised in that the lifting movement is carried out by means of a lifting platform (16).

4. Method according to at least claim 1, characterised in that the products (52) being conveyed are stacked.

5. Device for carrying out the method according to at least claim 1, comprising a bearing device (54) for the car body with wheels (32, 34), which are arranged on the floor side, and longitudinal parts (36, 38), the contact surfaces of which wheels and longitudinal parts lie at different levels, and a driving device (48), which is arranged on the floor side and engages with a drag chain conveyor (R), characterised in that the device consists of the drag chain conveyor (R), a bearing conveyor (K) and the bearing device (54), that the bearing device can be conveyed in the device either by means of the drag chain conveyor (R) or the bearing conveyor (K), and that the longitudinal parts (36, 38) are runners which interact with the bearing conveyor, the latter comprising a section which executes a lifting movement and the length of which is sufficient to accommodate at least one bearing device (30, 54), and the section executing the lifting movement being used to deposit the bearing device coming from the drag chain conveyor on a further section of the bearing conveyor, which further section causes the bearing device to be conveyed transversely to the conveying direction of the drag chain conveyor.

6. Device according to claim 5, characterised in that the length of the runners (36, 38), which extend in the main transport direction of the bearing device (30, 54), is less than the distance between the centres of the outer wheels (36, 38) arranged on the bearing device (54).

7. Device according to claim 5, characterised in that the side surfaces of the runners of the bearing device (30, 54) run along rollers (50) during transport by the drag chain conveyor (R).

## Revendications

1. Procédé pour te transport de carrosseries d'automobiles (52) sur un dispositif de support (30, 54) qui est transporté par un convoyeur à chaîne au sol (R), procédé caractérisé en ce que le transport s'opère par zones au moyen d'un transporteur-porteur (K) (transporteur à chariots ou à patins), assurant te déplacement et la fonction de porteur de charge, en ce que le passage du convoyeur à chaîne (R) sur le transporteur-porteur (K), et inversement, s'effectue constamment, et en ce que te transporteur-porter (K) comporte un tronçon (16) effectuant un mouvement de levage et dont ta longueur est suffisante pour qu'il reçoive au moins un dispositif de support (30, 54), ce tronçon servant à déposer le dispositif de support venant du convoyeur à chaîne sur un autre tronçon du transporteur-porteur, et cet autre tronçon assurant un transport du dispositif de support transversalement par rapport à la direction de transport du convoyeur à chaîne.

2. Procédé selon la revendication 1, caractérisé en ce que le plan de transport du dispositif de support (30, 54) pour la carrosserie d'automobile (52) sur le convoyeur à chaîne (R), se situe à un autre niveau que celui du transporteur-porteur (K).

3. Procédé selon au moins la revendication 1, caractérisé en ce que le mouvement de levage s'effectue au moyen d'une table de levage (16).

4. Procédé selon au moins la revendication 1, caractérisé en ce que le produit transporté (52) est empilé.

5. Dispositif pour la mise en oeuvre du procédé selon au moins la revendication 1, dispositif comprenant un dispositif de support (54) pour la carrosserie d'automobile, avec des roues (32, 34) disposées côté sol et des traverses (36, 38) avec des surfaces de contact et d'appui se situant à un niveau différent, ainsi qu'un dispositif d'entraînement (48) venant en prise avec un convoyeur à chaîne (R), dispositif caractérisé en ce qu'il est constitué par le convoyeur à chaîne (R), un transporteur-porteur (K), et le dispositif de support (54), en ce que dans ce dispositif, le dispositif de support est susceptible d'être transporté au choix par le convoyeur à chaîne (R) ou te transporteur-porteur (K), et en ce que les traverses (36, 38) sont des patins entrant en interaction avec le transporteur-porteur, tandis que te transporteur-porteur comporte un tronçon effectuant un mouvement de levage et dont la longueur est suffisante pour qu'il reçoive au moins un dispositif de support (30, 54), et ce tronçon effectuant le mouvement de levage sert à déposer le dispositif de support venant du convoyeur à chaîne sur un autre tronçon du transporteur-porteur, cet autre tronçon assurant un transport du dispositif de support transversalement par rapport à la direction de transport du convoyeur à chaîne.

6. Dispositif selon ta revendication 5, caractérisé en ce que ta longueur des patins (36, 38) s'étendant dans la direction du transport principat du dispositif de support (30, 54), est inférieure à la distance entre les axes des roues externes (32, 34) montées sur le dispositif de support (54).

7. dispositif selon la revendication 5, caractérisé en ce que, lors du transport par le convoyeur à chaîne (R), les surfaces latérales des patins du dispositif de support (30, 54) sont guidées contre des galets (50).

# Fig.1

# Fig.2